(19) **Europäisches Patentamt / European Patent Office / Office européen des brevets**

(11) **EP 2 899 177 B1**

(12) # EUROPEAN PATENT SPECIFICATION

(45) Date of publication and mention
of the grant of the patent:
**06.03.2019 Bulletin 2019/10**

(21) Application number: **13840044.5**

(22) Date of filing: **01.08.2013**

(51) Int Cl.:
**C05D 1/02** *(2006.01)*    **C05G 3/00** *(2006.01)*
**C05D 1/00** *(2006.01)*

(86) International application number:
**PCT/ES2013/070572**

(87) International publication number:
**WO 2014/044884 (27.03.2014 Gazette 2014/13)**

(54) **CONDITIONED POTASSIUM SULFATE COMPRISING A CALCIUM SULFATE PRECIPITATION INHIBITOR**

KONDITIONIERTES KALIUMSULFAT MIT EINEM CALCIUMSULFATFÄLLUNGSINHIBITOR

SULFATE DE POTASSIUM CONDITIONNÉ AVEC UN INHIBITEUR DE LA PRÉCIPITATION DE SULFATE DE CALCIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.09.2012 ES 201231446**

(43) Date of publication of application:
**29.07.2015 Bulletin 2015/31**

(73) Proprietor: **Fomento y Desarrollo Agricola S.L.**
**30850 Totana (Murcia) (ES)**

(72) Inventors:
- **FUENTES MARTINEZ, Vicenta**
  **E-30850 Totana (Murcia) (ES)**
- **GALLEGO LOPEZ, Jesús**
  **E-30850 Totana (Murcia) (ES)**
- **BOTIA MOLINA, Antonio**
  **E-30850 Totana (Murcia) (ES)**
- **FUENTES MARTINEZ, Julia**
  **E-30850 Totana (Murcia) (ES)**

(74) Representative: **Hoyng Rokh Monegier LLP**
**Rembrandt Tower, 31st Floor**
**Amstelplein 1**
**1096 HA Amsterdam (NL)**

(56) References cited:
**US-A- 3 891 397**    **US-A- 5 298 050**
**US-A- 6 036 740**

- **Brian Boman ET AL: "Fertigation Nutrient Sources and Application Considerations for Citrus 1", , 1 July 2002 (2002-07-01), XP055269275, Retrieved from the Internet: URL:https://edis.ifas.ufl.edu/pdffiles/CH/ CH18500.pdf [retrieved on 2016-04-28]**
- **Samiak Hamdona ET AL: "Influence of some Phosphates and Polyphosphate on the Precipitation of Calcium Sulfate Dihydrate in Sodium Chloride Solutions", , 8 January 2009 (2009-01-08), XP055269359, Retrieved from the Internet: URL:http://www.sciencedirect.com/science/a rticle/pii/S1658365512600065/pdfft?md5=acc 4853fa0546fad187b984365fe2916&pid=1-s2.0-S 1658365512600065-main.pdf [retrieved on 2016-04-28]**
- **NAWAF N. AL-MUTAIRI ET AL: "Effect of antiscalants for inhibition of calcium sulfate deposition in thermal desalination systems", DESALINATION AND WATER TREATMENT : SCIENCE AND ENGINEERING ; DWT, vol. 10, no. 1-3, 3 October 2009 (2009-10-03), pages 39-46, XP055269397, UK ISSN: 1944-3994, DOI: 10.5004/dwt.2009.732**
- **DATABASE WPI Derwent Publications Ltd., London, GB; AN 2009-B37730, XP055260190 & CN 101 333 133 A (CHAN-N) 31 December 2008**

**Description**

**FIELD OF THE INVENTION**

The present invention relates to a conditioned potassium sulfate by means of homogenous mixing with an additive intended for inhibiting interaction with the calcium present in irrigation water for the purpose of preventing or minimizing the formation of calcium sulfate precipitates when preparing stock solutions in fertigation.

**PRIOR ART**

Fertigation is a fertilization technique associated with the high-frequency localized irrigation systems whereby the fertilizers are applied dissolved in the water by injecting them into the irrigation network with a metering device from solutions containing a high concentration thereof. These solutions themselves can be liquid fertilizers or solutions of solid fertilizers dissolved by farmers in reservoirs arranged for this purpose on the irrigation head (stock solutions).

Solid fertilizers used in fertigation must be fertilizers that are highly pure and soluble for the purpose of obtaining solutions that are free of suspended solids which, if present, can block elements in the irrigation network, fundamentally filters, conduits and sprayers.

Highly pure products based on the three most widely used potassium fertilizers (potassium chloride, potassium sulfate and potassium nitrate) are marketed for use in fertigation. Among them, potassium chloride has the highest potassium content, is the most water-soluble (> 20% w/v), which allows obtaining solutions in the order of 14-16% $K_2O$ in optimized conditions, and furthermore is the least expensive. However, it has the drawback of supplying, in addition to potassium, a significant amount of chloride, an ion with respect to which a number of crops are particularly sensitive, negatively responding to increases in the concentration thereof, and the application of which is unadvisable in irrigation water and/or soil salinity conditions.

Out of the two potassium source alternatives to chloride, i.e., nitrate and sulfate, despite being more expensive and involving a simultaneous nitrogen supply, regardless of whether or not it is needed or appropriate, nitrate is the most widely used in fertigation for preparing potassium solutions given its greater solubility and the fact that it does not show interactions with the calcium present in irrigation water.

The relatively low solubility of potassium sulfate can be limiting in some applications associated with use as a fertilizer which require obtaining concentrated solutions, so establishing methods for increasing the water solubility thereof has been the object of study. The increase in solubility of potassium sulfate by purification or other means as described in patent document US005298050A (McLaughlin et al., *High water solubility potassium sulfate and method of producing same*), which is based on treating the product with an organic surfactant and/or with a salt of magnesium, has only been proven effective in obtaining high-concentration solutions when the product is dissolved in high-quality water. However, the increase in solubility *per se* does not involve any significant improvement when the product must be dissolved in hard water, i.e., that water characterized by having high calcium and/or magnesium contents and in which, therefore, the use of potassium sulfate can cause calcium sulfate precipitation in both irrigation sprayers and conduits and in the stock solution necessary for the application thereof, in this case limiting the possibility of its use.

In relation to blockages of irrigation network sprayers and conduits in fertigation systems in which the fertilizers are applied dissolved in hard water, the possibility of treating them with scaling inhibitors is known. For this purpose different types of both organic and inorganic compounds have been used: inorganic polyphosphates, homo- or copolymers of acrylic or meta-acrylic acid, organophosphorus compounds, etc., for which various mechanisms of action explaining their antiscaling activity, as well as their possible sequestering action, or the so-called "threshold effect", whereby the crystalline nuclei are blocked in an early stage of development, have been proposed. Nevertheless, it must be noted that these treatments are performed specifically on irrigation water in which fertilizers have been diluted at the application dose from stock solutions at concentrations in the order of ppm, thereby forming what is referred to as nutritive solutions, which are supplied through irrigation sprayers. However, the problem resulting from the generation of precipitates due to the interaction between ions supplied by fertilizers present in high concentrations in stock solutions with irrigation water ions, fundamentally in the case of hard water, is not resolved. This problem is particularly significant in the case of potassium sulfate when it is dissolved at high concentrations in irrigation water with relatively high calcium contents, given that even though the product is highly pure, which assures its complete dissolution in deionized water, it can give rise in these conditions to the immediate formation of precipitates blocking tank outlet filters and make the application impossible or reduce the efficacy thereof. Susceptibility of potassium sulfate to interact with the calcium present in irrigation water, giving rise to calcium sulfate precipitations, is greater than that of other fertilizers containing sulfates due to the potassium co-precipitation effect. This forces reducing use concentrations of potassium sulfate, with the practical drawbacks this entails by having to increase the number of solutions to be prepared to supply the same overall amount of potassium to the crop, or to use an alternative potassium fertilizer, usually potassium nitrate, which is more expensive, when supplying chlorides is unadvisable due to sensitivity of the crop or due to high water and/or soil salinity conditions.

Brian Boman ET AL: "Fertigation Nutrient Sources and Application Considerations for Citrus 1 ", 1 July 2002 (2002-07-01), discloses care must be exercised to avoid emitter plugging problems resulting from reactions of the fertilizer with the irrigation water. It discloses that chemical reactions between fertilizer materials can result in the formation of precipitates, which can plug the irrigation system.

US 3891397 relates to the production of pure salt by the vacuum pan or solar evaporation of brine to cause crystallization of salt therefrom.

Samiak Hamdona ET AL: "Influence of some phosphates and polyphosphate on the Precipitation of Calcium Sulfate Dihydrate in Sodium Chloride Solutions", 8 January 2009 (2009-01-08) studies the inhibiting effect of phosphates and polyphosphates on the precipitation rate of calcium sulfate dihydrate (gypsum) in sodium chloride solutions using constant composition technique in which the super-saturation and ionic strength were maintained constant at 25°C.

NAWAF N. AL-MUTAIRI ET AL ("Effect of antiscalants for inhibition of calcium sulfate deposition in thermal desalination systems", DESALINATION AND WATER TREATMENT: SCIENCE AND ENGINEERING ; DWT, val. 10, no. 1-3, 3 October 2009 (2009-10-03), pages 39-46) relates to effect of antiscalants for inhibition of calcium sulfate deposition in thermal desalination system.

## DISCLOSURE OF THE INVENTION

The present invention solves the problems described in the prior art because it provides a conditioned potassium sulfate by means of homogenous mixing with an additive that inhibits the interaction of potassium sulfate with the calcium present in the irrigation water, preventing or minimizing the formation of calcium sulfate precipitates when preparing stock solutions in fertigation.

In a first aspect, the present invention relates to a potassium sulfate base mixture (hereinafter, mixture of the present invention) consisting of potassium sulfate and between 0.5 and 5 wt.% of a polyphosphate-type calcium sulfate precipitate inhibitor additive, intended for preventing, reducing or eliminating precipitation of this salt and selected from potassium hexametaphosphate, sodium hexametaphosphate, sodium potassium hexametaphosphate, tetrasodium pyrophosphate, tetrapotassium pyrophosphate, sodium trimetaphosphate, sodium tripolyphosphate, potassium tripolyphosphate, trisodium pyrophosphate, disodium pyrophosphate, tripotassium pyrophosphate and dipotassium pyrophosphate.

In a more particular aspect of the present invention, the polyphosphate-type calcium sulfate precipitate inhibitor is hexametaphosphate sodium.

In a second aspect, the present invention relates to the use of the mixture of the present invention in preparing stock solutions for fertigation.

## DESCRIPTION OF THE DRAWINGS

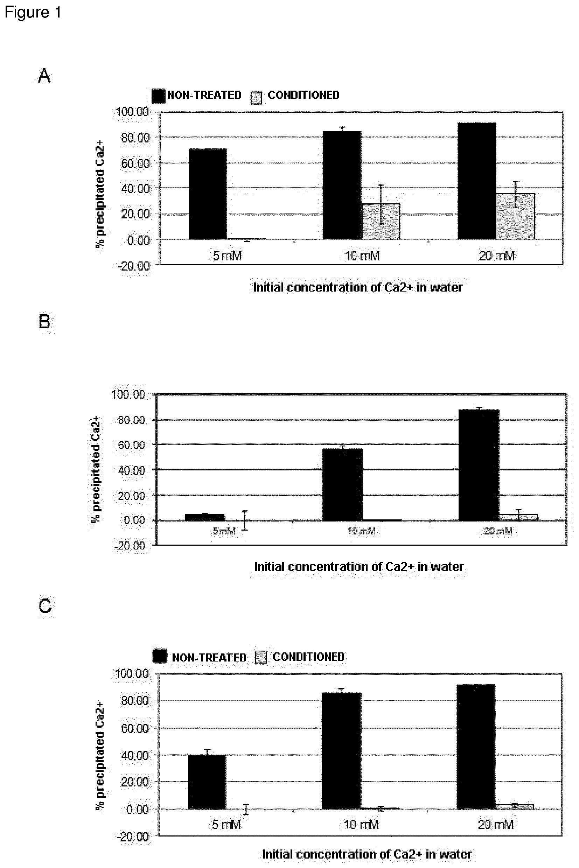

Figure 1 shows the mean values and standard deviations of the percentages of precipitated calcium with respect to the total initially present in 5, 10 and 20 mM calcium chloride solutions, 48 hours after dissolving in said solutions an amount equivalent to 5% w/v $K_2O$ of potassium sulfate. A: non-conditioned sample A in black and conditioned sample A in gray with its optimal dose of sodium hexametaphosphate; B: non-conditioned sample B in black and conditioned sample B in gray with its optimal dose of sodium hexametaphosphate; and C: non-conditioned sample C in black and conditioned sample C in gray with its optimal dose of sodium hexametaphosphate. A, B and C are samples of potassium sulfate from a different origin.

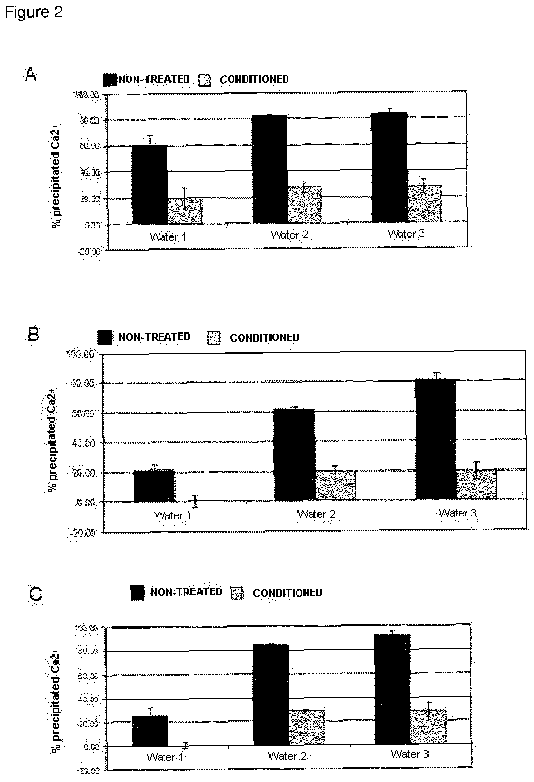

Figure 2 shows the mean values and standard deviations of the percentages of precipitated calcium with respect to the total initially present in solutions in irrigation water 1, 2 and 3, 48 hours after dissolving in said solutions an amount equivalent to 5% w/v $K_2O$ of potassium sulfate. A: non-conditioned sample A in black and conditioned sample A in gray with its optimal dose of sodium hexametaphosphate; B: non-conditioned sample B in black and conditioned sample B in gray with its optimal dose of sodium hexametaphosphate; and C: non-conditioned sample C in black and conditioned sample C in gray with its optimal dose of sodium hexametaphosphate. A, B and C are samples of potassium sulfate from a different origin.

## DETAILED DISCLOSURE OF THE INVENTION

The examples of the present invention were made with mixtures consisting of potassium sulfate in percentages comprised between 99.5 and 95 wt.% and sodium hexametaphosphate in percentages comprised between 0.5 and 5 wt.%.

In these demonstrative tests with the conditioned product, are prepared high concentration (5% w/v K$_2$O) solutions in water are prepared with varying calcium contents in which, after a period of 48 hours at 20-25ºC, the precipitated calcium due to interaction between the fertilizer and the water in which it is dissolved is significantly reduced with respect to non-treated potassium sulfate, which clearly shows that this conditioning allows extending the range of irrigation water qualities so for which use in fertigation is viable.

Potassium sulfate from different origins, both non-conditioned and conditioned with different proportions of sodium hexametaphosphate, was used in the tests. Specifically, compositions containing potassium sulfate in percentages of 99.9, 99.5, 99, 98, 97, 96 and 95 wt.%, to which sodium hexametaphosphate was added until reaching 100% of the mixture (respective percentages of sodium hexametaphosphate of 0.1, 0.5, 1, 2, 3, 4 and 5 wt.%), were used in the examples of the present invention. The conditioning was performed by means of manual mixing and subsequent mechanical homogenization in a rotary agitator of the indicated amounts of both components. The proportion of additive that was optimal for the purposes sought was shown to depend on the origin of the potassium sulfate.

The potassium sulfate-type fertilizer content currently used in fertigation is at least 50% K$_2$O. This minimum K$_2$O content must be maintained after incorporating the selected additive by mixing in order to preserve its identity, which is possible starting from high-purity potassium sulfate, the content of which is greater than the former, and limiting the incorporation of the additive at a concentration which allows maintaining the minimum reference value of 50% K$_2$O in the final product, which means that considering that the highest content value for the product intended for use as a fertilizer is around 53% K$_2$O, the maximum percentage of additive to be incorporated must not exceed 5%.

Even though the tested additive proportions covered the 0.05-5% interval, the examples only include the dose that turned out to be optimal in each case, i.e., that for which the increase thereof up to the pre-established maximum dose (5%) does not provide a significant improvement in the reduction of the precipitated calcium under test conditions.

The solutions were made without heating (simulating field conditions) and remained at room temperature (20-25ºC) for 48 hours, which is the time allowed for the precipitation process that proved to be appropriate, in that shorter times entailed disparate precipitation extents between the different repetitions of one and the same sample, which must be related to an incomplete development of the precipitation equilibrium, whereas longer times did not affect the results.

48 hours after preparation, the solutions were homogenized and centrifuged at 2000 rpm for 15 minutes to make separation of the precipitated solid easier, and the calcium remaining in solution was determined by ICP-OES.

All the tests were carried out in triplicate.

The obtained results are, on one hand, shown as a percentage of precipitated calcium with respect to the total initially present in the solution for the purpose of illustrating the extent of the problems in each case, and on the other hand, as a parameter according to which it is necessary to evaluate the improvement entailed by conditioning potassium sulfate, according to this invention, with respect to the behavior of the non-conditioned product, indicating the calcium precipitation inhibition percentage, by means of a calculation similar to that which is described in patent EP0375615, according to the following formula:

$$\% \text{ Improvement} = \left( \left( [Ca^{2+}]^* - [Ca^{2+}] \right) / \left( [Ca^{2+}]^l - [Ca^{2+}] \right) \right) \cdot 100$$

where: $[Ca^{2+}]^*$ is the concentration of calcium corresponding to the sample conditioned with the optimal additive dose, $[Ca^{2+}]^l$ is the initial concentration of calcium and $[Ca^{2+}]$ the final concentration of calcium of the non-conditioned sample.

*EXAMPLE 1: Efficacy of the mixture of the present invention in calcium sulfate precipitation inhibition in solutions with different concentrations of calcium.*

This example demonstrates the efficacy of the combination of hexametaphosphate, at a previously optimized dose in the range of 0.5-5%, with potassium sulfate from different origins (A, B and C), in calcium sulfate precipitation inhibition in 5% w/v K$_2$O solutions made in 5, 10 and 20 mM CaCl$_2$ solutions in deionized water (EC < 5 $\mu$S/cm, pH≈6).

Table 1 shows the mean values and standard deviations of the percentages of precipitated calcium with respect to the total initially present in 5, 10 and 20 mM calcium chloride solutions, 48 hours after dissolving in said solutions an amount equivalent to 5% w/v K$_2$O of potassium sulfate. A, B and C are non-conditioned samples, A*, B* and C* are conditioned samples that have been conditioned with the optimal dose of sodium hexametaphosphate for each case.

| Table 1 | % Precipitated Calcium | | | | | |
|---|---|---|---|---|---|---|
| Initial concentration of calcium | A | A* | B | B* | C | C* |
| 5 mM | 70.5 (0.4) | 0.1 (1.1) | 4.5 (0.6) | 0 (7.4) | 39.3 (4.8) | 0 (3.9) |
| 10 mM | 84.7 (3.8) | 27.8 (15.1) | 56.5 (2.9) | 0.3 (0.7) | 85.3 (3.8) | 0.8 (1.6) |
| 20 mM | 91.3 (0.1) | 35.9 (10.3) | 88.2 (2.0) | 4.1 (4.6) | 91.5 (0.3) | 3.2 (1.6) |

For each of the tested conditioned or non-conditioned potassium sulfates, the percentage of precipitated calcium increased when the initial concentration of calcium did, the efficacy improvement (Table 2) being greater for cases B and C than for A, which clearly shows that although conditioning the product, whatever its origin is, entails a significant improvement in its suitability for use in preparing stock solutions for fertigation due to precipitation inhibition with respect to the sulfate supplied with the calcium present in the water, characteristics of the product to be conditioned are a factor to be considered.

Table 2 shows the mean values of the percentages of improvement obtained in the calcium precipitation inhibition entailed by conditioning with sodium hexametaphosphate potassium sulfate from different origins (A, B and C) used for obtaining 5% w/v $K_2O$ solutions in deionized water with 5, 10 and 20 mM concentrations of $CaCl_2$.

| Table 2 | % of Improvement | | |
|---|---|---|---|
| Initial concentration of calcium | Sample A | Sample B | Sample C |
| 5 mM | 99.8 | 100.0 | 100.0 |
| 10 mM | 67.7 | 100.0 | 100.0 |
| 20 mM | 62.3 | 95.4 | 94.9 |

*EXAMPLE 2: Practical efficacy of the mixture of the present invention in irrigation water.*

This example demonstrated the practical efficacy of the product resulting from the invention with respect to the conventional product (non-conditioned potassium sulfate) due to reduction of the precipitate generated in 5% w/v $K_2O$ solutions made in different irrigation water (Table 3), in which in addition to the presence of relatively high concentrations of calcium, other factors such as pH, electrical conductivity and carbonate/bicarbonate content, can have an effect.

Table 3 shows the analytical parameters of interest of the irrigation water used in the examples of the present invention.

| Table 3 | pH | EC (mS/cm) | $HCO_3^-$ (mmol/l) | $SO_4^{2-}$ (mmol/l) | $Ca^{2+}$ (mmol/l) | $Mg^{2+}$ (mmol/l) | $K^+$ (mmol/l) | $Na^+$ (mmol/l) |
|---|---|---|---|---|---|---|---|---|
| Water 1 | 7.7 | 1.6 | 5.0 | 5.2 | 2.9 | 3.6 | 0.3 | 7.6 |
| Water 2 | 6.9 | 3.1 | 5.0 | 9.6 | 7.6 | 7.0 | 0.2 | 13.7 |
| Water 3 | 7.1 | 6.7 | 10.1 | 31.2 | 11.8 | 20.9 | 0.9 | 40.6 |

Table 4 shows the mean values and standard deviations of the percentages of precipitated calcium with respect to the total initially present in 5% w/v $K_2O$ solutions of samples of potassium sulfate in irrigation water 1, 2 and 3. A, B and C are non-conditioned samples; A*, B* and C* are conditioned samples that have been conditioned with the optimal dose of sodium hexametaphosphate.

| Table 4 | % Precipitated Calcium | | | | | |
|---|---|---|---|---|---|---|
| | A | A* | B | B* | C | C* |
| Water 1 | 60.3 (4.0) | 19.7 (8.6) | 21.2 (4.2) | 0 (4.5) | 24.9 (7.9) | 0 (2.3) |
| Water 2 | 82.9 (0.5) | 27.7 (4.5) | 62.0 (1.6) | 19.5 (3.9) | 84.6 (1.1) | 29.2 (1.0) |
| Water 3 | 83.3 (0.3) | 28.0 (5.7) | 80.8 (4.8) | 19.6 (5.6) | 91.9 (3.9) | 28.1 (7.2) |

Table 5 shows the mean values of the percentages of improvement in calcium precipitation inhibition entailed by conditioning with sodium hexametaphosphate in 5% w/v K$_2$O solutions of samples of potassium sulfate in irrigation water 1, 2 and 3.

| Table 5 | % of Improvement | | |
|---------|----------|----------|----------|
| | Sample A | Sample B | Sample C |
| Water 1 | 67.3 | 100.0 | 100.0 |
| Water 2 | 66.6 | 68.5 | 65.5 |
| Water 3 | 66.5 | 75.8 | 69.4 |

The tests showed that sodium hexametaphosphate was effective in mixtures with potassium sulfate from different origins for inhibiting (reducing, and in some cases completely preventing) calcium sulfate precipitation in stock solutions containing concentrations of potassium sulfate in the order of 10% w/v (recommendable maximum concentration for dissolving in field conditions) and significant calcium contents in the irrigation water for a minimum period of 48 hours at room temperature (20-25$^{o}$C). Accordingly, it is unquestionable that conditioned potassium sulfate that has been conditioned with hexametaphosphate shows better suitability for use in fertigation than conventional potassium sulfate.

The demonstrated efficacy of conditioning potassium sulfate for use in fertigation according to this invention provides the following advantages: 1) reducing the formation of precipitates in stock solution tanks due to the interaction of potassium sulfate with the calcium present in irrigation water, and thereby reducing the formation of blockages in irrigation filters and sprayers; 2) possibility of increasing the concentration of potassium sulfate in solutions with irrigation water; 3) favoring the use of potassium sulfate, regardless of the quality of the available irrigation water, in those cases in which this fertilizer is particularly indicated, without having to use less recommendable alternatives, such as potassium chloride, when the crop is sensitive to chlorides or is grown in high salinity conditions, or more expensive alternatives, such as potassium nitrate.

## Claims

1. A mixture consisting of potassium sulfate and between 0.5 and 5 wt.% of a calcium sulfate precipitate inhibitor additive from the group of inorganic polyphosphates, selected from potassium hexametaphosphate, sodium hexametaphosphate, sodium potassium hexametaphosphate, tetrasodium pyrophosphate, tetrapotassium pyrophosphate, sodium trimetaphosphate, sodium tripolyphosphate, potassium tripolyphosphate, trisodium pyrophosphate, disodium pyrophosphate, tripotassium pyrophosphate and dipotassium pyrophosphate.

2. The mixture according to claim 1, where the inorganic polyphosphate-type calcium sulfate precipitate inhibitor additive is sodium hexametaphosphate.

3. Use of the mixture according to any of claims 1-2 in fertigation.

## Patentansprüche

1. Mischung, bestehend aus Kaliumsulfat und zwischen 0,5 und 5 Gew.-% eines Kalziumsulfat-Ausfällungshemmer-Additivs aus der Gruppe der anorganischen Polyphosphate, ausgewählt aus Kaliumhexametaphosphat, Natriumhexametaphosphat, Natrium-Kaliumhexametaphosphat, Tetranatriumpyrophosphat, Tetrakaliumpyrophosphat, Natriumtrimetaphosphat, Natriumtripolyphosphat, Kaliumtripolyphosphat, Trinatriumpyrophosphat, Dinatriumpyrophosphat, Trinatriumpyrophosphat und Dikaliumpyrophosphat.

2. Mischung nach Anspruch 1, wobei das anorganische Ausfällungshemmer-Additiv vom Typ Polyphosphat-Kalziumsulfat Natriumhexametaphosphat ist.

3. Verwendung der Mischung nach einem der Ansprüche 1-2 in der Fertigation.

**Revendications**

1. Mélange consistant en sulfate de potassium et entre 0,5 et 5 % en poids d'un additif inhibiteur de précipité de sulfate de calcium choisi dans le groupe des polyphosphates inorganiques, choisi parmi l'hexamétaphosphate de potassium, l'hexamétaphosphate de sodium, l'hexamétaphosphate de sodium et de potassium, le pyrophosphate tétrasodique, le pyrophosphate tétrapotassique, le trimétaphosphate de sodium, le tripolyphosphate de sodium, le tripolyphosphate de potassium, le pyrophosphate trisodique, le pyrophosphate disodique, le pyrophosphate tripotassique et le pyrophosphate dipotassique.

2. Mélange selon la revendication 1, dans lequel l'additif inhibiteur de précipité de sulfate de calcium de type polyphosphate inorganique est l'hexamétaphosphate de sodium.

3. Utilisation du mélange selon l'une quelconque des revendications 1 et 2 dans la fertigation.

Figure 1

A

B

C

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 005298050 A, McLaughlin
- US 3891397 A
- EP 0375615 A

### Non-patent literature cited in the description

- **BRIAN BOMAN et al.** *Fertigation Nutrient Sources and Application Considerations for Citrus 1,* 01 July 2002
- **SAMIAK HAMDONA et al.** *Influence of some phosphates and polyphosphate on the Precipitation of Calcium Sulfate Dihydrate in Sodium Chloride Solutions,* 08 January 2009
- **NAWAF N. AL-MUTAIRI et al.** Effect of antiscalants for inhibition of calcium sulfate deposition in thermal desalination systems. *DESALINATION AND WATER TREATMENT: SCIENCE AND ENGINEERING,* 03 October 2009, vol. 10 (1-3), 39-46